(19) Europäisches Patentamt

European Patent Office

Office européen des brevets

(11) **EP 0 835 772 B1**

(12) **EUROPÄISCHE PATENTSCHRIFT**

(45) Veröffentlichungstag und Bekanntmachung des Hinweises auf die Patenterteilung:
**06.12.2000   Patentblatt 2000/49**

(51) Int Cl.⁷: **B60G 17/015**

(21) Anmeldenummer: **97116601.2**

(22) Anmeldetag: **24.09.1997**

(54) **Vorrichtung zur Steuerung der Schwingungsdämpfer einer Fahrwerksfederung**

Device for controlling the dampers of a suspension

Commande pour les amortisseurs d'une suspension

(84) Benannte Vertragsstaaten:
**DE FR GB IT NL SE**

(30) Priorität: **10.10.1996   DE 19641698**

(43) Veröffentlichungstag der Anmeldung:
**15.04.1998   Patentblatt 1998/16**

(73) Patentinhaber: **DaimlerChrysler AG
70567 Stuttgart (DE)**

(72) Erfinder: **Köster, Rolf
76185 Karlsruhe (DE)**

(56) Entgegenhaltungen:
**EP-B- 0 184 915          DE-A- 3 826 843
DE-A- 3 923 929          DE-A- 3 925 102
US-A- 5 555 173**

**Beschreibung**

Die Erfindung betrifft ein Verfahren zur Steuerung der Schwingungsdämpfer einer Fahrwerksfederung in Abhängigkeit von Signalen einer Signalgebervorrichtung zur Erfassung von Hubbewegungen der Räder relativ zum Fahrzeugaufbau (bzw. Chassis) des Fahrzeuges, wobei für eine vorgegebene Zeitspanne auf relativ zu einer Grunddämpfung erhöhte Dämpfung umgestellt wird, wenn ein vorgegebener Schwellwert des Hubweges überschritten wird.

Bei Fahrzeugen mit Luftfederung läßt sich ein besonders hoher Komfort für die transportierten Personen bzw. eine besonders hohe Schonung des Transportgutes erreichen. Allerdings besitzen Luftfederungen eine vergleichsweise geringe Progressivität, d.h. die vom jeweiligen Luftfederaggregat erzeugte Abstützkraft ändert sich nur relativ wenig, wenn sich der Abstand zwischen Rad und Aufbau am jeweiligen Federaggregat verändert. Aus diesem Grunde werden die Luftfederaggregate oftmals mit vergleichsweise steif abgestimmten Schwingungsdämpfern kombiniert.

Um eine Beeinträchtigung des Federungskomforts durch übermäßig steife Dämpfer zu vermeiden, ist es grundsätzlich bekannt, steuerbare Dämpfer einzusetzen. So werden bei luftgefederten Fahrzeugen des öfteren durch Druckluft gesteuerte Dämpfer eingesetzt, wobei die Dämpfersteuerung in Abhängigkeit vom Luftdruck im Luftfederaggregat erfolgt, d.h. der Luftfederbalg oder dgl. ist pneumatisch mit einem pneumatischen Steuereingang des Dämpfers verbunden. Auf diese Weise kann eine kostengünstige Dämpfersteuerung in Abhängigkeit von der Beladung des Fahrzeuges erreicht werden. Jedoch läßt sich mit dieser bekannten Anordnung keine automatische Anpassung der Dämpfung an die jeweilige Fahrstrecke bzw. die jeweilige Fahrdynamik erreichen.

Des weiteren ist eine elektronische Regelung der Dämpfer bekannt. Dabei werden über entsprechende Signalgeber, beispielsweise Beschleunigungsmesser, Bewegungsparameter des Fahrzeuges erfaßt und zur Dämpfersteuerung herangezogen. Bei Überschreitung höherer Schwellwerte des jeweils erfaßten Bewegungsparameters kann dann von einer normalerweise vorliegenden Grunddämpfung vorübergehend auf eine stark erhöhte Dämpfung übergegangen werden. Auf diese Weise läßt sich zwar die Fahrdynamik bei der Dämpfersteuerung berücksichtigen. Gleichwohl wird die jeweilige Fahrstrecke nur unvollkommen berücksichtigt, da der Wert der Grunddämpfung lediglich einen Kompromiß darstellen kann.

Aus der DE 39 25 102 C2 ist eine Steuerung der eingangs angegebenen Art für Schwingungsdämpfer bekannt. Dabei wird der Federungshub der Fahrzeugräder mit entsprechenden Sensoren überwacht. Sobald der Federungshub einen vorgegebenen Schwellwert überschreitet, wird für eine vorgebbare Zeitspanne, die parameterabhängig - z.B. in Abhängigkeit von der Fahrgeschwindigkeit - veränderbar sein kann, auf erhöhte Dämpfung umgeschaltet.

Die DE 41 39 692 C2 zeigt ein weiteres Verfahren zur elektronischen Beeinflussung der Schwingungsdämpfer von Fahrzeugen. Hier ist am Fahrzeugaufbau ein Vertikalbeschleunigungssensor angeordnet. Aus dessen Signalen wird einerseits der jeweilige Ist-Wert der Aufbaubeschleunigung und andererseits durch Mittelwertbildung ein geglätteter Wert der Aufbaubeschleunigung festgestellt. Sodann wird der Betrag der Differenz zwischen dem Ist-Wert und dem geglätteten Wert ermittelt. Des weiteren wird die Häufigkeit erfaßt, mit der der Betrag dieser Differenz einen Schwellwert überschreitet. Falls die Häufigkeit einen vorgegebenen Häufungsschwellwert überschreitet, wird die eingestellte Dämpfung erhöht.

Die DE 39 18 735 A1 zeigt ein zur Dämpfungssteuerung dienendes System, bei dem sowohl die vertikale Aufbaugeschwindigkeit als auch die Einfedergeschwindigkeit unter Einsatz von Sensoreinrichtungen erfaßt werden, die die Aufbaubeschleunigung und die Achsbeschleunigung oder die Aufbaubeschleunigung und den Einfederweg oder die Aufbaubeschleunigung und die Einfedergeschwindigkeit oder die Achsbeschleunigung und den Einfederweg oder die Achsbeschleunigung und die Einfedergeschwindigkeit registrieren. Die Sensorsignale werden derart verarbeitet, daß im Bereich der sogenannten Radresonanz eine verstärkte Dämpfung erfolgt.

Aus der EP 0 184 915 B1 ist es bekannt, bei einer Federung die Häufigkeit der Überschreitung eines Schwellwertes des Hubweges zu erfassen und die Dämpfung in Abhängigkeit von der Häufigkeit der Schwellwertüberschreitung zu steuern.

Aufgabe der Erfindung ist es nun, ein vorteilhaftes Konzept einer Dämpfersteuerung aufzuzeigen, welche mit einer besonders einfachen Sensorik zu arbeiten vermag.

Diese Aufgabe wird erfindungsgemäß dadurch gelöst, daß die Überschreitung unterschiedlich großer Schwellwerte des Hubweges überwacht wird, wobei bei Überschreitung eines hohen Schwellwertes bzw. hoher Schwellwerte des Hubweges - zumindest bei Überschreitung eines hohen Schwellwertes in Einfederrichtung - für die vorgegebene Zeitspanne auf erhöhte Dämpfung umgestellt wird, und wobei in Abhängigkeit von der zeitlichen Häufung der Überschreitung eines niedrigen Schwellwertes des Hubweges unterschiedliche Werte der Grunddämpfung eingestellt werden.

Die Erfindung beruht auf dem allgemeinen Gedanken, nicht nur bei stark erhöhter Bewegung des Fahrzeugaufbaus bzw. der Räder vorübergehend auf eine stark erhöhte Dämpfung umzuschalten sondern darüber hinaus auch die jeweils vorhandene Grunddämpfung in Anpassung an die Fahrverhältnisse zu verändern. Durch die ständige Optimierung des Wertes der Grunddämpfung werden die normalen Aufbau- und Radschwingungen weitestgehend unabhängig von den Fahrverhältnissen gering gehalten, mit der Folge, daß stark erhöhte Bewegungsparameter, bei denen auf stark erhöhte Dämpfung umgeschaltet wird, nur vergleichsweise selten auftreten können, obwohl ständig eine komfortbetonte Abstimmung der Federung möglich ist.

Da bei der Erfindung lediglich die Hubwege der Räder relativ zum Fahzeugaufbau bzw. Chassis überwacht bzw. gezählt werden müssen, ergibt sich eine konstruktiv einfache Steuerung, die außerdem praktisch verzögerungsfrei arbeiten kann.

Die Erfindung bietet den Vorteil, daß ohne größeren Aufwand sowohl einer Anregung der Aufbauresonanz als auch einer Anregung der Radresonanz entgegengewirkt werden kann. Im Falle der Aufbauresonanz führt der Fahrzeugaufbau relativ zur Fahrbahn heftige Hubbewegungen aus, deren Frequenz in der Umgebung von 1Hz bis 2Hz liegt. Im Falle der Anregung der Radresonanz "trampeln" die Räder mit einer Frequenz, die größenordnungsmäßig etwa 10mal so groß wie die Aufbauresonanzfrequenz ist und meist zwischen 10Hz bis 20Hz liegt.

Dabei ist in der Regel vorgesehen, daß die Zeitspanne, in der die erhöhte Dämpfung nach dem Zeitpunkt der Überschreitung des hohen Schwellwertes des Hubweges eingeschaltet bleibt, größer ist, als die Periode der Aufbauresonanz des Fahrzeuges.

Damit wird der Tatsache Rechnung getragen, daß ein sehr starker Federungshub regelmäßig zu einer vergleichsweise starken Bewegung des Aufbaus relativ zur Fahrbahn führt, so daß die Aufbauresonanz mit erhöhter Wahrscheinlichkeit angeregt werden könnte, wenn dem erfolgten Federungshub in einem der Periode der Aufbauresonanz entsprechenden zeitlichen Abstand ein weiterer stärkerer Federungshub folgen sollte.

Des weiteren kann in vorteilhafter Weise vorgesehen sein, die jeweils eingeschaltete Stufe der Grunddämpfung zu erhöhen, wenn der niedrige Schwellwert des Hubweges während eines unmittelbar zurückliegenden Kurzzeitintervalls, dessen Länge mehr als eine Periode (bzw. wenige Perioden) einer Radresonanz überdeckt, mit einer der Radresonanzfrequenz zugeordneten Häufung überschritten wird. Auf diese Weise wird einer sich ggf. aufbauenden Radresonanz sehr frühzeitig durch Erhöhung der Grunddämpfung entgegengewirkt.

Außerdem kann in vorteilhafter Weise vorgesehen sein, die jeweils eingestellte Stufe der Grunddämpfung zu erhöhen, wenn der niedrige Schwellwert des Hubweges während eines unmittelbar zurückliegenden Langzeitintervalls, dessen Länge mehr als eine Periode (bzw. wenige Perioden) einer Aufbauresonanz überdeckt, mit einer der Aufbauresonanzfrequenz zugeordneten Häufung überschritten wird. Auf diese Weise wird der Entwicklung einer Aufbauresonanz frühzeitig entgegengesteuert.

Durch einen Vergleich einer Kurzzeithäufung mit einer Langzeithäufung kann gegebenenfalls die Tendenz der Veränderung der Fahrbahnbeschaffenheit bei der Fahrt festgestellt werden.

Im übrigen wird hinsichtlich bevorzugter Merkmale der Erfindung auf die Ansprüche sowie die nachfolgende Erläuterung einer vorteilhaften Ausführungsform verwiesen, die anhand der Zeichnung beschrieben wird.

Dabei zeigt

Fig. 1 eine Darstellung des Federungssystems,
Fig. 2 ein Diagramm mit verschiedenen Dämpfungskennlinien, die erfindungsgemäß einstellbar sind, und
Fig. 3 ein Blockschaltbild der Dämpfungssteuerung.

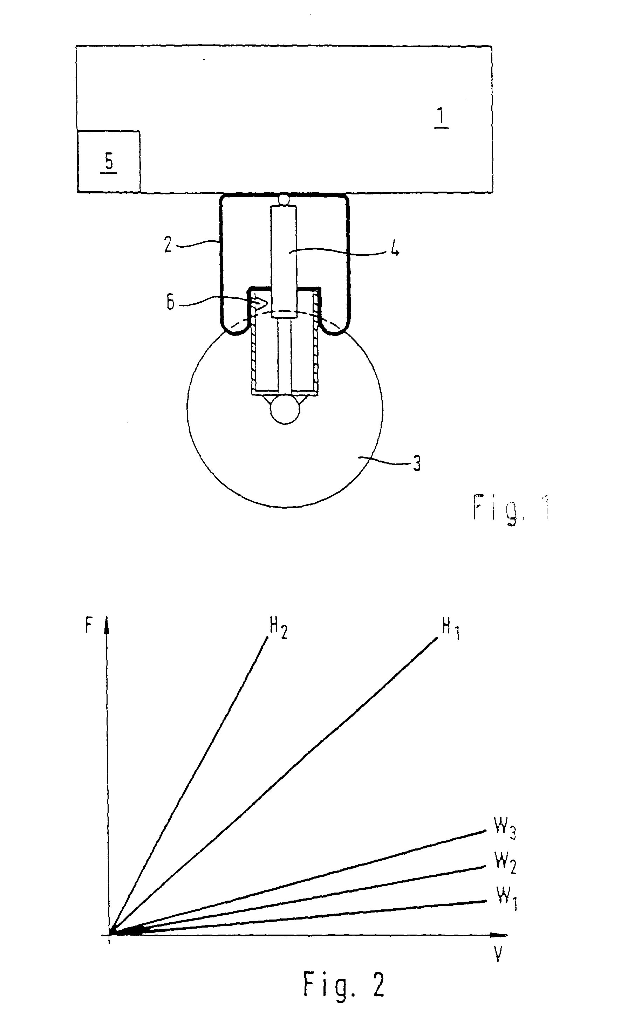

Gemäß Figur 1 ist der lediglich schematisch dargestellte Aufbau 1 eines Fahrzeuges über Luftfederaggregate 2 auf den Fahrzeugrädern 3 bzw. den zugehörigen Achsen abgestützt, wobei in Figur 1 lediglich ein Rad 3 sowie ein Luftfederaggregat 2 dargestellt sind. Parallel zum Luftfederaggregat 2 ist ein steuerbarer Stoßdämpfer 4 angeordnet, der im dargestellten Beispiel elektrisch von einer Steuerelektronik 5 geregelt wird. Dazu ist die Steuerelektronik 5 eingangsseitig mit einem Weggeber 6 verbunden, dessen Signale den Abstand zwischen Aufbau 1 und Rad 3 wiedergeben.

Aus den den Abstand zwischen Aufbau 1 und Rad 3 wiedergebenden Signalen des Weggebers 6 läßt sich der jeweilige Federungshub X relativ zu einer Normallage des Rades 3 relativ zum Aufbau 1 bestimmen. In weiter unten dargestellter Weise werden bei der Steuerung des Stoßdämpfers 4 die Häufigkeiten berücksichtigt, mit denen der Federungshub X vorgegebene Schwellwerte überschreitet und/oder kritischen Werten nahekommt.

In Fig. 2 sind einige charakteristische Kurven für mögliche Einstellungen der Dämpferkraft F in Abhängigkeit von der Hubgeschwindigkeit V des Federungshubes dargestellt.

Dabei zeigen die Kurven $W_1$ bis $W_3$ Beispiele für unterschiedliche Einstellungen einer Grunddämpfung. Die Kurven $H_1$ und H2 zeigen Beispiele für die Einstellung einer stark erhöhten Dämpfung.

Die stark erhöhte Dämpfung gemäß den Kurven $H_1$ bzw. $H_2$ wird vorübergehend eingestellt, sobald der Federungshub einen größeren Schwellwert $B_1$ oder $B_2$ überschreiten sollte. Die Einschaltdauer der stark erhöhten Dämpfung gemäß den Kurven $H_1$ oder $H_2$ liegt vorzugsweise etwas oberhalb der Periode der Aufbauresonanz und kann mehreren Perioden der Aufbauresonanz entsprechen. Auf diese Weise wird wirksam verhindert, daß durch weitere starke Federungshübe die Aufbauresonanz aufgebaut werden könnte. Gleichzeitig wird berücksichtigt, daß ein starker Federungshub regelmäßig zu einer merklichen Aufbaubewegung relativ zur Fahrbahn führt, wodurch die Wahrscheinlichkeit einer Anregung der Aufbauresonanz erhöht wird.

In Abhängigkeit von der zeitlichen Häufung, mit der der Federungshub X einen relativ geringen Schwellwert A überschreitet, werden verschiedene Stufen der Grunddämpfung eingeschaltet. Überschreitet die Häufung bspw. einen vorgegebenen Wert $H_3$, so wird die jeweils eingeschaltete Stufe $W_{aktuell}$ der Grunddämpfung um eine Stufe erhöht, so daß für die neu eingeschaltete Stufe $W_{neu}$ der Grunddämpfung gilt:

$$W_{neu} = W_{aktuell+ 1}.$$

Liegt die Häufung dagegen unterhalb eines Wertes $H_2$, so wird die jeweils eingeschaltete Stufe $W_{aktuell}$ um eine Stufe vermindert, d.h. es gilt:

$$W_{neu} = W_{aktuell- 1}.$$

Liegt die Häufung zwischen den Werten $H_3$ und $H_2$, bleibt die bisher eingeschaltete Stufe $W_{aktuell}$ unverändert, d.h. es gilt:

$$W_{neu} = W_{aktuell}.$$

Gemäß einer besonders bevorzugten Ausführungsform der Erfindung werden bei der Ermittlung der zeitlichen Häufung sowohl ein der Radresonanz zugeordneter Häufungswert und/oder ein der Aufbauresonanz zugeordneter Häufungswert überwacht.

Wenn sich eine Radresonanz entwickelt, wird der geringe Schwellwert A (oder ein anderer vorzugebender geringer Schwellwert) des Federungshubes mit einer der Radresonanzfrequenz $f_r$ entsprechenden Frequenz überschritten. Dies ist gleichbedeutend damit, daß der vorgenannte Schwellwert A innerhalb einer Zeitspanne $t_i$ mit einer Häufigkeit $h_i$ überschritten wird, deren Wert bei $t_i f_r$ liegt. Wenn nun die Zeitspanne $t_i$ so kurz gewählt wird, daß sie wenige Perioden der Radresonanz bzw. mehr als eine Periode der Radresonanz überdeckt, kann bereits nach sehr kurzer Zeit die Gefahr eines Aufbaus einer Radresonanz erkannt und deren Ausbildung entgegengesteuert werden, indem die Grunddämpfung auf einen erhöhten Wert eingestellt wird, bspw. entsprechend der Kurve $W_3$.

In grundsätzlich ähnlicher Weise kann auch ein der Aufbauresonanz zugeordneter Häufungswert von Federungshüben, die den vorgenannten Schwellwert A (oder einen anderen vorzugebenden geringen Schwellwert) des Federungshubes überschreiten, überwacht werden. Falls sich eine Aufbauresonanz entwickelt, wird der Schwellwert A mit einer der Aufbauresonanzfrequenz $f_a$ entsprechenden Frequenz überschritten. Dies ist gleichbedeutend damit, daß die Häufigkeit hk, mit der diese Überschreitungen innerhalb eines Zeitintervalles $t_k$ auftreten, etwa bei $f_a t_k$ liegt. Wenn nun die Zeitspanne $t_k$ so gewählt wird, daß sie wenige Perioden der Aufbauresonanz bzw. mehr als eine Periode dieser Aufbauresonanz überdeckt, kann die Gefahr einer Entwicklung der Aufbauresonanz frühzeitig erkannt und der Entwicklung der Aufbauresonanz frühzeitig durch Erhöhung der Grunddämpfung entgegengewirkt werden.

Aufgrund der ständigen Adaption der Grunddämpfung kann mit der Erfindung ein optimales Fahrverhalten hinsichtlich Sicherheit und Komfort gewährleistet werden.

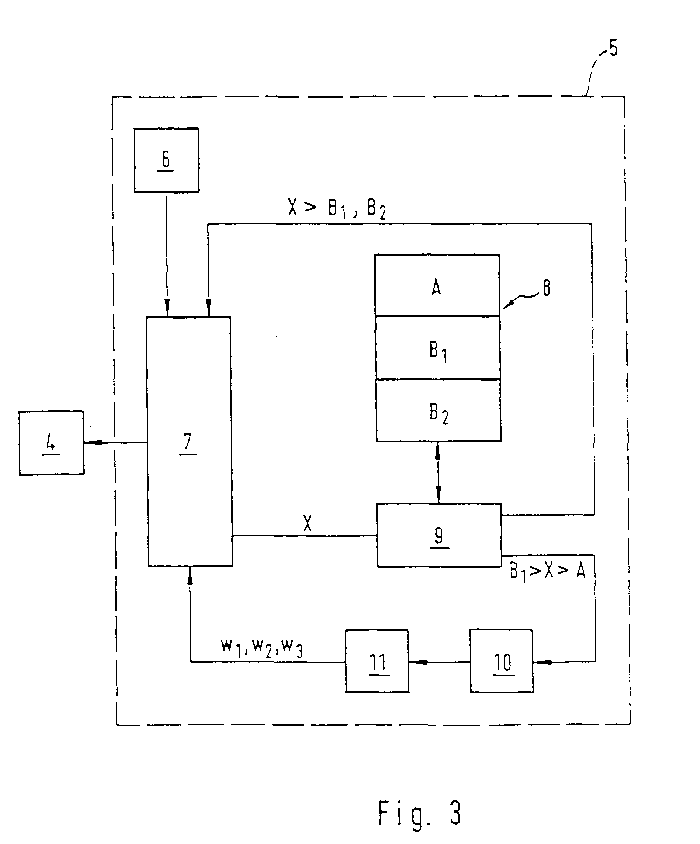

Gemäß Fig. 3 besitzt die Steuerelektronik 5 einen Rechner 7, der eingangsseitig mit dem Weggeber 6 verbunden ist und aus dessen Signalen den Federungshub X ermittelt. Innerhalb eines Speichers 8 der Steuerelektronik 5 sind verschiedene Schwellwerte, z. B. A und $B_1$ sowie $B_2$, abgelegt. Mittels eines Vergleichers 9 der Steuerelektronik 5 wird nun der Ist-Wert von X mit den vorgenannten Schwellwerten verglichen. Dabei wird einem Eingang des Rechners 7 sofort ein Signal zugeführt, wenn X einen der betragsmäßig hohen Schwellwerte $B_1$ und $B_2$ überschreitet. In einem solchen Falle stellt der Rechner 7 den Stoßdämpfer 4 sofort auf eine steife Charakteristik entsprechend der Kurve $H_1$ bzw. $H_2$ in Fig. 2 ein, und zwar für die oben vorgegebenen Zeitspannen, zu deren Ermittlung lediglich die Taktimpulse der in üblicher Weise taktweise arbeitenden Steuerelektronik 5 gezählt werden müssen.

Danach wird auf die jeweils eingestellte Grunddämpfung zurückgeschaltet.

Zur Adaption der Grunddämpfung an die jeweiligen Betriebsbedingungen wird jeweils dann, wenn X den betragsmäßig relativ geringen Schwellwert A überschreitet, ein Signal an einen Zähler 10 gegeben. Damit kann eine nachgeschaltete Rechnerstufe 11 jeweils Werte für die zeitliche Häufung der Überschreitung des Schwellwertes A ermitteln, wobei die "Kurzzeithäufung" für ein unmittelbar zurückliegendes Kurzzeitintervall $t_i$ und/oder die "Langzeithäufung" für ein unmittelbar zurückliegendes Langzeitintervall $t_k$ ermittelt wird. Für die Erfassung der jeweiligen zeitlichen Intervalle brauchen nur die Taktimpulse der Steuerelektronik 5 gezählt zu werden. Sobald dabei vorgegebene Häufungswerte überschritten werden, wird die Grunddämpfung erhöht.

Außerdem kann überwacht werden, ob die oben angegebenen Häufungswerte $h_i$ und $h_k$ zumindest näherungsweise erreicht werden. Sollte dies der Fall sein, wird vorzugsweise eine besonders hohe Grunddämpfung eingestellt.

Sobald die zeitliche Häufung der Überschreitungen des Schwellwertes A hinreichend weit von den kritischen Häufungswerten $h_i$ und $h_k$ beabstandet sind und/oder unterhalb vorgegebener Grenzwerte liegen, wird die Grunddämpfung um eine Stufe vermindert, bzw. es bleibt die niedrigste Stufe der Grunddämpfung eingeschaltet.

Gegebenenfalls kann durch einen Vergleich zwischen der Kurzzeithäufung und der Langzeithäufung die Tendenz einer Veränderung der Fahrt- bzw. Fahrbahnbedingungen festgestellt werden. Bei völlig gleichbleibenden Bedingungen haben die Quotienten $h_i/t_i$ und $h_k/t_k$ gleiche bzw. annähernd gleiche Werte. Wenn bei gleichbleibender Fahrgeschwindigkeit $h_i/t_i < h_k/t_k$ gilt, nimmt die Anzahl der Fahrbahnunebenheiten pro Wegstrecke ab. Falls $h_i/t_i > h_k/t_k$ gilt, nimmt die räumliche Dichte der Unebenheiten zu.

## Patentansprüche

1. Verfahren zur Steuerung der Schwingungsdämpfer (4) einer Fahrwerksfederung (2) in Abhängigkeit von Signalen einer Signalgebervorrichtung (6) zur Erfassung von Hubbewegungen der Räder (3) relativ zum Fahrzeugaufbau (1), wobei für eine vorgegebene Zeitspanne auf relativ zu einer Grunddämpfung erhöhte Dämpfung umgestellt wird, wenn ein vorgegebener Schwellwert des Hubweges überschritten wird,
   **dadurch gekennzeichnet,**
   daß die Überschreitung unterschiedlich großer Schwellwerte des Hubweges überwacht wird, wobei bei Überschreitung eines hohen Schwellwertes bzw. hoher Schwellwerte ($B_1,B_2$) des Hubweges - zumindest bei Überschreitung eines hohen Schwellwertes in Einfederrichtung - für die vorgegebene Zeitspanne auf erhöhte Dämpfung ($H_1,H_2$) umgestellt wird, und wobei in Abhängigkeit von der zeitlichen Häufung der Überschreitung eines niedrigen Schwellwertes (A) des Hubweges unterschiedliche Werte ($W_1,W_2,W_3$) der Grunddämpfung eingestellt werden.

2. Verfahren zur Steuerung der Schwingungsdämpfer nach Anspruch 1,
   **dadurch gekennzeichnet,**
   daß eine jeweils eingeschaltete Stufe ($W_{aktuell}$) der Grunddämpfung ($W_1,W_2,W_3$) um eine Stufe erhöht wird, wenn der niedrige Schwellwert (A) mit einer zeitlichen Häufung überschritten wird, die eine für die Erhöhung der Grunddämpfungsstufe vorgegebene Häufungsschwelle überschreitet.

3. Verfahren zur Steuerung der Schingungsdämpfer nach einem der Ansprüche 1 oder 2,
   **dadurch gekennzeichnet,**
   daß die jeweils eingeschaltete Stufe ($W_{aktuell}$) der Grunddämpfung ($W_1,W_2,W_3$) um eine Stufe vermindert wird, wenn der niedrige Schwellwert (A) nicht oder nur mit einer zeitlichen Häufung überschritten wird, die unter einer für eine Verminderung der Grunddämpfungsstufe vorgegebenen Häufungsschwelle liegt.

4. Verfahren zur Steuerung der Schwingungsdämpfer nach einem der Ansprüche 1 bis 3,
   **dadurch gekennzeichnet,**

daß die jeweils eingeschaltete Stufe ($W_{aktuell}$) der Grunddämpfung ($W_1,W_2,W_3$) unverändert bleibt, wenn der niedrige Schwellwert (A) mit einer zeitlichen Häufung überschritten wird, die zwischen einer für eine Erhöhung der Grunddämpfungsstufe vorgegebene Häufungsschwelle und einer für eine Verminderung der Grunddämpfungsstufe vorgegebenen Häufungsschwelle liegt.

5. Verfahren zur Steuerung der Schwingungsdämpfer nach Anspruch 1 bis 4,
   **dadurch gekennzeichnet,**
   daß die jeweils eingeschaltete Stufe ($W_{aktuell}$) der Grunddämpfung ($W_1,W_2,W_3$) erhöht wird, wenn der niedrige Schwellwert (A) des Hubweges während eines unmittelbar zurückliegendes Kurzzeitintervalls, dessen Länge mehr als eine Periode einer Radresonanz überdeckt, mit einer Häufung überschritten wird, die nahe eines der Radresonanz zugeordneten Häufungswertes liegt.

6. Verfahren zur Steuerung der Schwingungsdämpfer nach einem der Ansprüche 1 bis 5,
   **dadurch gekennzeichnet,**
   daß die jeweils eingeschaltete Stufe ($W_{aktuell}$) der Grunddämpfung ($W_1,W_2,W_3$)) erhöht wird, wenn der niedrige Schwellwert (A) des Hubweges während eines unmittelbar zurückliegenden Langzeitintervalls, dessen Länge mehr als eine Periode einer Aufbauresonanz überdeckt, mit einer Häufung überschritten wird, die nahe eines der Aufbauresonanz zugeordneten Häufungswertes liegt.

7. Luftgefedertes Fahrzeug mit Schwingungsdämpfern, die durch ein Verfahren nach einem der Ansprüche 1 bis 6 gesteuert werden.

## Claims

1. Method for controlling the shock-absorbers (4) of a chassis suspension system (2) as a function of signals from a signal emitter (6) which determines the jounce movements of the wheels (3) relative to the vehicle body (1), such that for a predetermined time the damping level is set higher relative to a basic damping level when a predetermined threshold value of the stroke path is exceeded,
   **characterised in that**
   the exceeding of stroke path threshold values of different magnitude is monitored, and when a high threshold value or high threshold values ($B_1$, $B_2$) of the stroke path is/are exceeded - or at least when a high threshold value in the jounce direction is exceeded - the damping level is increased for the predetermined time, and such that as a function of the time count of instances when a low threshold value (A) of the stroke path is exceeded, the basic damping level is set to different values ($W_1$, $W_2$, $W_3$).

2. Method for the control of shock-absorbers according to Claim 1,
   **characterised in that**
   a respective set level ($W_{current}$) of the basic damping ($W_1$, $W_2$, $W_3$) is increased by one step when the low threshold value (A) is exceeded with a time count in excess of a count threshold predetermined for an increase of the basic damping level.

3. Method for the control of shock-absorbers according to either of Claims 1 or 2,
   **characterised in that**
   the respective set level ($W_{current}$) of the basic damping ($W_1$, $W_2$, $W_3$) is reduced by one step when the low threshold value (A) is not exceeded, or is only exceeded with a time count below a count threshold predetermined for a reduction of the basic damping level.

4. Method for the control of shock-absorbers according to any of Claims 1 to 3,
   **characterised in that**
   the respective set level ($W_{current}$) of the basic damping ($W_1$, $W_2$, $W_3$) remains unchanged when the low threshold value (A) is exceeded with a time count between a count threshold predetermined for increasing the basic damping level and a count threshold predetermined for reducing the basic damping level.

5. Method for the control of shock-absorbers according to Claims 1 to 4,
   **characterised in that**
   the respective set level ($W_{current}$) of the basic damping ($W_1$, $W_2$, $W_3$) is increased when the low threshold value (A) of the stroke path is exceeded with a count, during an immediately preceding short time interval whose length covers more than one period of a wheel resonance, that is close to a count value associated with the wheel resonance.

6. Method for the control of shock-absorbers according to any of Claims 1 to 5,
   **characterised in that**
   the respective set level ($W_{current}$) of the basic damping ($W_1$, $W_2$, $W_3$) is increased when the low threshold value (A) of the stroke path is exceeded with a count, during an immediately preceding long time interval whose length covers more than one period of a body resonance, that is close to a count value associated with the body resonance.

7. Vehicle with an air suspension system, whose shock-absorbers are controlled by a method according to any of Claims 1 to 6.

**Revendications**

1. Procédé de commande de l'amortisseur de vibrations (4) d'une suspension de châssis (2) en fonction de signaux émis par un dispositif capteur de signaux (6), afin d'appréhender des déplacements de débattement des roues (3) par rapport à la carrosserie du véhicule (1), un passage à un amortissement accru par rapport à un amortissement de base étant effectué pendant un intervalle de temps prédéterminé, si une valeur de seuil de la course de débattement est prédéterminée et dépassée, caractérisé en ce qu'
   on surveille le dépassement de valeurs de seuil d'ampleur différente de la course de débattement, un passage à un amortissement accru ($H_1$, $H_2$) étant effectué, pour l'intervalle de temps prédéterminé, en cas de dépassement d'une valeur de seuil haute ou de valeurs de seuil hautes ($B_1$, $B_2$) de la course de débattement - au moins en cas de dépassement d'une valeur de seuil haute dans le sens de la course de compression - et différentes valeurs ($W_1$, $W_2$, $W_3$) de l'amortissement de base étant réglées, en fonction de la fréquence temporelle du dépassement d'une valeur de seuil basse (A) de la course de déplacement.

2. Procédé de commande des amortisseurs de vibrations selon la revendication 1, caractérisé en ce qu'un degré ($W_{actuel}$), chaque fois mis en service, de l'amortisseur de base ($W_1$, $W_2$, $W_3$) est augmenté d'un degré lorsque la valeur de seuil basse (A) est dépassée avec une fréquence temporelle qui dépasse un seuil de fréquence prédéterminé pour l'augmentation du degré d'amortissement de base.

3. Procédé de commande des amortisseurs de vibrations selon l'une des revendications 1 ou 2, caractérisé en ce que le degré ($W_{actuel}$) chaque fois mis en service de l'amortisseur de base ($W_1$, $W_2$, $W_3$) est diminué d'un degré lorsque la valeur de seuil basse (A) n'est plus dépassée ou bien dépassée avec une fréquence temporelle inférieure à un seuil de fréquence prédéterminé pour une diminution du degré d'amortissement de base.

4. Procédé de commande des amortisseurs de vibrations selon l'une des revendications 1 à 3, caractérisé en ce que
   le degré ($W_{actuel}$) chaque fois mis en service de l'amortissement de base ($W_1$, $W_2$, $W_3$) reste inchangé si la valeur de seuil basse (A) est dépassée avec une fréquence temporelle comprise entre un seuil de fréquence prédéterminé pour l'augmentation du degré d'amortissement de base et un seuil de fréquence prédéterminé pour une diminution du degré d'amortissement de base.

**5.** Procédé de commande des amortisseurs de vibrations selon la revendication 1 à 4, caractérisé en ce que le degré ($W_{actuel}$) chaque fois mis en service de l'amortissement de base ($W_1$, $W_2$, $W_3$) est augmenté lorsque la valeur de seuil basse (A) de la course de débattement, pendant un intervalle de temps court venant immédiatement d'être écoulé, dont la durée est supérieure à une période d'une résonance de la roue, est dépassée avec une fréquence proche d'une valeur de fréquence associée à la résonance de la roue.

**6.** Procédé de commande des amortisseurs de vibrations selon l'une des revendications 1 à 5, caractérisé en ce que le degré ($W_{actuel}$) chaque fois mis en service de l'amortissement de base ($W_1$, $W_2$, $W_3$) est augmenté lorsque la valeur de seuil basse (A) de la course de débattement, pendant un intervalle de temps long venant d'être écoulé, dont la durée est supérieure à une période d'une résonance de la carrosserie, est dépassée avec une fréquence proche d'une valeur de fréquence associée à la résonance de carrosserie.

**7.** Véhicule à suspension pneumatique équipé d'amortisseurs de vibrations, commandés par un procédé selon l'une des revendications 1 à 6.

Fig. 1

Fig. 2

Fig. 3